# EUROPEAN PATENT SPECIFICATION

(11) **EP 1 666 692 B1**
(45) Date of publication and mention of the grant of the patent: **18.03.2009**
(21) Application number: 04468024.7
(22) Date of filing: 06.12.2004
(51) Int. Cl.: E06B 9/04

(54) **Reinforcing tie**
Verstärkungsband
Ferrure de renforcement

(43) Date of publication of application: 07.06.2006
(73) Proprietor: Kovinoplastika Loz Industrija kovinskih in plasticnih izdelkov d. d., 1386 Stari trg pri Lozu (SI)
(72) Inventor: Vukovic, Aleksander, 1384 Grahovo (SI)
(74) Representative: Ivancic, Bojan

(56) References cited:
- FR-A- 2 558 889
- FR-A- 2 637 008
- US-A- 4 348 140

## Description

The present invention refers to a reinforcing tie, e.g. for a shutter, which could be placed either between a shutter and a hinge, whereby said tie carries the hinge and simultaneously serves as a reinforcement for the shutter frame, or independently, whereby serving only as a frame reinforcement.

During assembly of a reinforcing tie by means of screws the protective layer on the lower part of the head of the screw is very often damaged. Also, due to tightening the screws, the protective layer of the reinforcing tie is damaged by the head of each screw. As a result, the anti-corrosion protection is questionable with the known solutions, in particular in environments with highly corrosive air such as maritime places.

A further disadvantage of the known solutions lies therein that during assembly e.g. to the shutter several different embodiments of reinforcing ties is required, one for each attachment of a hinge in the lower and the upper part and/or left and right, and an additional embodiment for reinforcing the opposite edges. Therewith, the production costs increase considerably, and additionally swapping of individual embodiments occurs during assembly resulting in unnecessary and time consuming re-assembly.

It is the object of the present invention to create a reinforcing tie that eliminates the problems of the known solutions.

The object as set above is solved by a reinforcing tie comprising a flat reinforcing section, preferably an L shaped section, formed with a plurality of mutually equally spaced through-holes formed with a hopper-like extensions on the upper side of the reinforcing tie, each said extension being intended for receiving a protective insert. Said protective insert is attached to the reinforcing section by means of a form-locking preveting therewith turning of the protective insert about the longitudinal axis thereof. According to the prefered embodiment, each through-hole comprises in the area of the bottom side of the reinforcing tie with a circumferential bulge formed so as to receive said protective insert in a snap manner.

One of the possible embodiments of said protective insert comprises a body shaped as a frustum of a pyramid with a cylindrical projection attached to the top thereof. The latter is on its outer side formed with a semicircular groove, said circumferential bulge of the through-hole of the reinforcing tie cooperates therewith. Furthermore, the protective insert is formed with a through-hole intended for acceptance of a fastening screw, said through-hole is suitably adapted to receive the head of said fastening screw. In order to prevent potential rotation about the longitudinal axis of the protective insert, the latter can be formed in a different similar way without departing from the spirit and scope of the invention.

The present invention will become more fully understood from the detailed description given hereinafter and the accompanying drawings, wherein
- Fig. 1: shows a reinforcing tie according to the invention viewed from above,
- Fig. 2: shows a section through the line II-II of Fig. 1,
- Fig. 3: shows a partial longitudinal section of a protective insert.

A reinforcing tie 1 according to the invention consists of a flat reinforcing section preferably L shaped section 2, each arm thereof is formed with a plurality of preferably mutually equally spaced through-holes 3. Said through-holes 3 are formed at the upper side of the L section 2, i.e. at the side as seen with the mounted section 2, with a hopper-like extensions 4 intended for the reception of protective inserts 5. Furthermore, each through-hole 3 is formed in the area of the lower side of the section 2, i.e. at the side facing the shutter, with a circumferential bulge 6. Said hopper-like extensions 4 preferably resemble the shape of a pyramid.

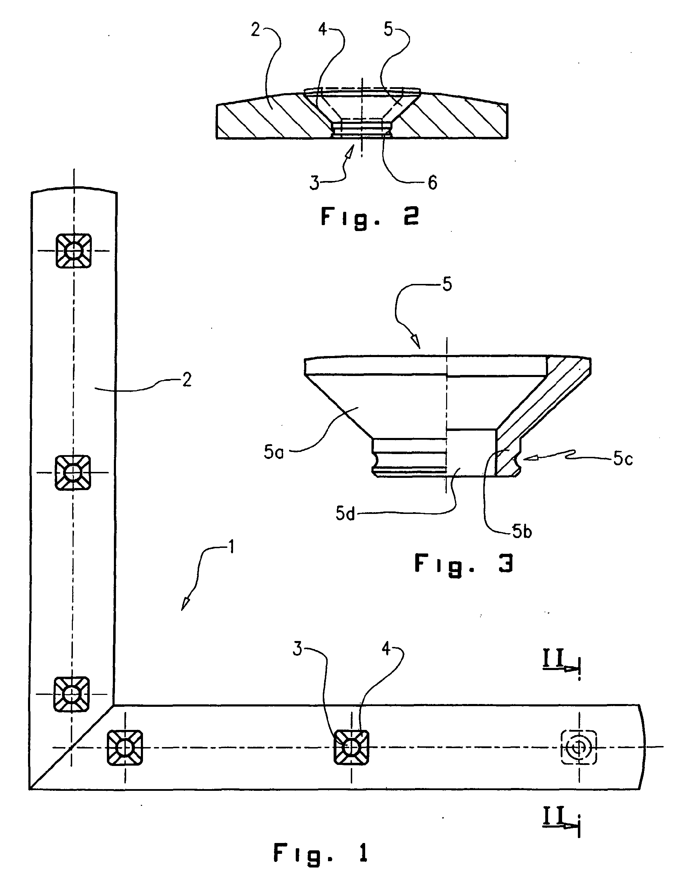

Said protective insert 5 (shown in Fig. 1 and Fig. 2 with a slashed line) preferably comprises a body 5a in a form of a frustum of a pyramid with a cylindrical projection 5b attached to the top thereof. The latter is formed with a semicircular groove 5c on the outer side thereof with which cooperates said circumferential bulge 6 when the protective insert 5 is inserted into the through-hole 3 of the section 2. Further, the protective insert 5 is formed with a through-hole 5d in order to receive a fastening screw not shown. The through-hole 5d is suitably adapted for the receipt of the head of the fastening screw not shown. The pyramid form of the protective insert 5 is required in order to prevent turning of said insert 5 in the hopper-like extension 4 of the through-hole 3.

In order to fix the section 2 according to the invention onto the shutter hinge, not shown, regardless of the position of the hinge i.e. in the lower part or in the upper part, and left or right, is the hinge part which abuts the section 2 formed with a projection which is in the sense of form and structure identical to the pyramidal body 5a of the protective insert 5. Said projection rests in that case in the hopper-like extension 4 of the through-hole 3 in the section 2, said hinge being fixed therewith. Afterwards, it only remains to fix the hinge with a fastening screw. The protective inserts 5 are inserted into the remaining through-holes 3 of the section 2 snapping with the semicircular groove 5c into the bulge 6 of the through-hole 3.

Said section 2 is preferably made of metal, while each protective insert 5 is preferably made of plastic. Only one of the possible embodiments of the protective insert 5 is shown in the drawings, however, said insert can be formed in a different similar way, in order to prevent potential rotation about the longitudinal axis thereof, without departing from the spirit and scope of the invention.

The reinforcing tie 1 according to the invention is preferably L shaped. In the instance, however, when the shutter is relatively high so that more than two hinges are required, an additional hinge is placed therebetween which is mounted onto a reinforcing tie, the form thereof differs from the L shaped embodiment as described above in that the reinforcing section is formed as a longitudinal band.

## Claims

1. Reinforcing tie (1), e.g. for a shutter, which could be placed either between a shutter and a hinge, whereby said tie carries the hinge and simultaneously serves as a reinforcement for the shutter frame, or independently, whereby serving only as a frame reinforcement, ***characterised in that*** it consists of a flat reinforcing section (2) formed with a plurality of mutually equally spaced through-holes (3) formed with a hopper-like extensions (4) on the upper side of the reinforcing tie, each said extension being intended for receiving a protective insert (5) which is attached to said reinforcing section by means of a form-locking preventing therewith rotational movement of the protective insert (5) about the longitudinal axis thereof, each through-hole (3) is formed in the area of the bottom side of the reinforcing tie with a circumferential bulge (6).

2. Reinforcing tie according to claim 1, ***characterised in that*** said protective insert (5) preferably comprises a body (5a) shaped as a frustum of a pyramid with a cylindrical projection (5b) attached to the top thereof, the latter being formed on its outside with a semicircular groove (5c) with which cooperates said circumferential bulge (6) of the through-hole (3), said protective insert (5) is further formed with a through-hole (5d) for receiving a fastening screw, and the through-hole (5d) of the protective insert (5) is suitably adapted for receiving the head of said fastening screw.

3. Reinforcing tie according to claim 1 and 2, ***characterised in that*** said hopper like extensions (4) preferably resemble the shape of a pyramid.

4. Reinforcing tie according to claim 1 and 3, ***characterised in that*** the reinforcing section is an L shaped section (2).

5. Reinforcing tie according to claim 1 and 3, ***characterised in that*** the reinforcing section is a longitudinal band.

6. Reinforcing tie according to claim 1 and 5, ***characterised in that*** the Reinforcing section is made of metal.

7. Reinforcing tie according to claim 1 and 5, ***characterised in that*** the protective insert is made of plastic.

## Patentansprüche

1. Verstärkungselement bzw. -beschlag (1) z. B. für Fensterladen, das entweder zwischen einem Fensterladen und einem Gelenk, wodurch das Element das Gelenk trägt und gleichzeitig als eine Verstärkung für den Fensterladenrahmen dient, oder unabhängig bzw. selbstständig platziert sein kann, wodurch es nur als eine Rahmenverstärkung dient, **dadurch gekennzeichnet, dass** es aus einem flachen Verstärkungsabschnitt (2) besteht, der mit einer Mehrzahl von zueinander gleichmäßig beabstandeten Durchgangslöchern (3) gebildet ist, die mit trichterartigen Erstreckungen (4) auf bzw. an der oberen Seite des Verstärkungselements gebildet sind, wobei jede Erstreckung dazu bestimmt ist, einen Schutzeinsatz (5) aufzunehmen, der durch Formschluss an dem Verstärkungsabschnitt angebracht ist, wodurch eine Drehbewegung des Schutzeinsatzes (5) um die Längsachse davon verhindert wird, wobei jedes Durchgangsloch (3) in dem Bereich der Bodenseite des Verstärkungselements mit einer Umfangsausbauchung (6) gebildet ist.

2. Verstärkungselement nach Anspruch 1, **dadurch gekennzeichnet, dass** der Schutzeinsatz (5) vorzugsweise einen Körper (5a) umfasst, der als Kegelstumpf einer Pyramide mit zylindrischem Vorsprung (5b) geformt ist, der an der Oberseite davon angebracht ist, wobei der Letztere an seiner Außenseite mit einer halbrunden Nut bzw. Rille (5c) gebildet ist, die mit der Umfangsausbauchung (6) des Durchgangslochs (3) zusammenwirkt, wobei der Schutzeinsatz (5) ferner mit einem Durchgangsloch (5d) zum Aufnehmen einer Befestigungsschraube gebildet ist, und wobei das Durchgangsloch (5d) des Schutzeinsatzes (5) auf geeignete Weise angepasst ist, den Kopf der Befestigungsschraube aufzunehmen.

3. Verstärkungselement nach Anspruch 1 und 2, **dadurch gekennzeichnet, dass** die trichterartigen Erstreckungen (4) vorzugsweise der Form einer Pyramide gleichen.

4. Verstärkungselement nach Anspruch 1 und 3, **dadurch gekennzeichnet, dass** der Verstärkungsabschnitt ein L-förmigen Abschnitt (2) ist.

5. Verstärkungselement nach Anspruch 1 und 3, **dadurch gekennzeichnet, dass** der Verstärkungsabschnitt ein Längsstreifen ist.

6. Verstärkungselement nach Anspruch 1 und 5, **dadurch gekennzeichnet, dass** der Verstärkungsabschnitt aus Metall besteht.

7. Verstärkungselement nach Anspruch 1 und 5, **dadurch gekennzeichnet, dass** der Schutzeinsatz aus Kunststoff besteht.

## Revendications

1. Ferrure de renforcement (1), par exemple pour un volet, qui pourrait être placée soit entre un volet et une charnière, ce par quoi ladite ferrure porte la charnière et sert simultanément de renfort pour le cadre de volet, ou indépendamment, permettant ainsi de servir seulement de cadre de renforcement, **caractérisée par le fait qu'**elle consiste en une section de renforcement plate (2) comportant une pluralité de trous traversants (3) espacés mutuellement de manière égale, comportant des extensions (4) de type trémie sur le côté supérieur de la ferrure de renforcement, chaque extension précitée étant destinée à recevoir un insert protecteur (5) qui est fixé à ladite section de renforcement au moyen d'un verrouillage de forme empêchant un mouvement de rotation avec celui-ci de l'insert protecteur (5) autour de l'axe longitudinal de celui-ci, chaque trou traversant (3) comportant dans la zone du côté inférieur de la ferrure de renforcement un bossage périphérique (6).

2. Ferrure de renforcement selon la revendication 1, **caractérisée par le fait que** ledit insert protecteur (5) comprend, de préférence, un corps (5a) façonné comme un tronc de pyramide avec une projection cylindrique (5b) attachée à la partie supérieure de celui-ci, cette dernière comportant sur son extérieur une rainure semi-circulaire (5c) avec laquelle coopère ledit bossage périphérique (6) du trou traversant (3), ledit insert protecteur (5) comportant également un trou traversant (5d) pour recevoir une vis de fixation, et le trou traversant (5d) de l'insert protecteur (5) étant adapté de façon appropriée pour recevoir la tête de ladite vis de fixation.

3. Ferrure de renforcement selon l'une des revendications 1 et 2, **caractérisée par**_ le fait que lesdites extensions 4 de type trémie ressemblent de préférence à la forme d'une pyramide.

4. Ferrure de renforcement selon l'une des revendications 1 et 3, **caractérisée par le fait que** la section de renforcement est une section (2) en forme de L.

5. Ferrure de renforcement selon l'une des revendications 1 et 3, **caractérisée par le fait que** la section de renforcement est une bande longitudinale.

6. Ferrure de renforcement selon l'une des revendications 1 et 5, **caractérisée par le fait que** la section de renforcement est faite de métal.

7. Ferrure de renforcement selon l'une des revendications 1 et 5, **caractérisée par le fait que** l'insert protecteur est fait de matière plastique.
